# EUROPÄISCHE PATENTSCHRIFT

(11) **EP 4 061 660 B1**
(45) Veröffentlichungstag und Bekanntmachung des Hinweises auf die Patenterteilung: **04.06.2025**
(21) Anmeldenummer: 20878025.4
(22) Anmeldetag: 20.11.2020
(51) Int. Cl.: B60K 1/00, B60K 1/04, B60K 16/00, B65D 90/14, B65D 90/22

(54) **WECHSELBRÜCKENAUFBAU, INSBESONDERE VOM TYP WAB, SOWIE TRANSPORTCONTAINER FÜR ELEKTRISCH ANGETRIEBENE ZUGFAHRZEUGE MIT ZUGEORDNETEM BATTERIEAUFNAHMEFACH**
EXCHANGEABLE CONTAINER BODY, IN PARTICULAR OF THE SWAP BODY TYPE, AND TRANSPORT CONTAINER FOR ELECTRICALLY POWERED TRACTIVE VEHICLES WITH ASSOCIATED BATTERY COMPARTMENT
STRUCTURE DE CAISSE MOBILE, EN PARTICULIER DE TYPE WAB, CONTENEUR DE TRANSPORT POUR VÉHICULES DE TRACTION À COMMANDE ÉLECTRIQUE, À COMPARTIMENT DE RÉCEPTION DE BATTERIE ASSOCIÉ

(30) Priorität: 20.11.2019 AT 3762019
(43) Veröffentlichungstag der Anmeldung: 28.09.2022
(73) Patentinhaber: EVM AG, 9492 Eschen (LI); Klammer, Mario Robert, 57550 Creutzwald (FR)
(72) Erfinder: KLAMMER, Mario Robert, 57550 Creutzwald (FR)
(74) Vertreter: Torggler & Hofmann Patentanwälte - Innsbruck
(86) Internationale Anmeldenummer: PCT/AT2020/000017
(87) Internationale Veröffentlichungsnummer: WO 2021/097504

(56) Entgegenhaltungen:
- EP-A1- 0 022 837
- EP-A1- 2 369 656
- EP-A2- 0 457 713
- CN-A- 107 020 938
- DE-A1- 102012 020 643
- DE-A1- 2 800 257
- DE-U1- 202008 005 948
- DE-U1- 9 409 899
- US-A1- 2018 015 967
- US-A1- 2018 191 005

## Beschreibung

Aus der CN 105691479 ist ein Sattelauflieger mit elektrisch angetriebenen Achsen bekannt, bei welchem eine erste Batterie an der Rückseite des Führerhauses des Antriebfahrzeuges, eine zweite Batterie an der Unterseite des Führerhauses und eine dritte Batterie am Boden des Sattelanhängers montiert ist.

Diese Anordnung der Batterien hat den Nachteil, dass die obengenannten Aufnahmebereiche für die Batterien bezüglich des an diesen Stellen zur Verfügung stehenden Platzes sehr begrenzt sind. Somit hängt auch die maximale Gesamtkapazität der Batterien von dem zur Verfügung stehenden begrenzten Platzangebot ab und führt daher zu einer sehr begrenzten Transportreichweite des Fahrzeuges. Auch das Einbringen sowie der Austausch der Batterien an diesen Stellen ist kompliziert und umständlich.

Auch die Verbindung des Batteriekabels mit dem Stromkabel des Zugfahrzeuges ist umständlich und mit großem Aufwand verbunden.

Darüber hinaus gibt es keine Möglichkeiten, die Batterien hinsichtlich der herrschenden Außentemperaturen in einen optimalen Betriebszustand zu versetzen. Gegen Brände oder mechanische Einwirkungen bei Unfällen ist kein entsprechender Schutz vorgesehen. Weiters mangelt es an einer gemeinsamen Überwachung der Batterien hinsichtlich eines gefährlichen Betriebszustandes bzw, eines Ausfalles einer oder mehrerer Batterien.

Aufgabe der Erfindung ist es daher, eine Batterieanordnung in einem Wechselbrückenaufbau bzw. Container für elektrisch angetriebene und hybridbetriebene Sattelfahrzeuge und Motorwagen vorzuschlagen, bei welcher die oben genannten Nachteile vermieden werden.

Die US 2018/191005 A1 offenbart einen Transportcontainer, der die Merkmale des Oberbegriffs des Anspruchs 1 beinhaltet.

Erfindungsgemäß wird diese Aufgabe durch die Merkmale des kennzeichnenden Teils des Anspruchs 1 gelöst.

Mit einer Kammer der beschriebenen Art wird die vorstehende Zielsetzung in vorteilhafter und erfinderischer Weise erreicht.

Das Batteriekabel, das ist das Hauptstromkabel der in die Kammer eingebrachten Batterien, weist vorzugsweise an seinem türseitigen Ende eine Steckerbuchse auf, welche an die Steckerseite des in der Tür angeordneten Steckverbinders angesteckt ist, während von außen das Stromkabel des Zugfahrzeuges mittels eines Steckers an die Buchse des Steckverbinders angeschlossen ist.

Somit kann in einfacher Weise das Zugfahrzeug mit einem Außenstecker mit den Batterien in der Kammer verbunden werden.

Das Batteriekabel wird bei Bedarf durch eine der Kammerwände geführt, ist aber in jedem Fall dichtend in der Tür oder Wand eingesetzt.

Die Transportreichweite des elektrisch angetriebenen Zugfahrzeuges wird auf Grund einer entsprechend groß ausgelegten Kammer für die Batterien erheblich gesteigert.

Je nach verschiedenartiger Batterien ist die Tür an der Vorderseite der Kammer in mehrere Türen unterteilt. So sind auch Untersektionen der Kammer einzeln zugänglich, was bei Wartungsarbeiten von großem Vorteil ist.

Gemäß Anspruch 2 besteht eine weitere vorteilhafte Ausführung des erfindungsgemäßen Gegenstandes darin, dass die Tür bzw. die Türen mit einer Rahmendichtung versehen ist bzw. sind, welche die Kammer dichtend abschließt bzw. abschließen, aber zumindest eine der Türen zusätzlich mit Ventilen zum Druckausgleich ausgestattet ist.

Dies hat den Vorteil, dass von außen keine Staub- u. Feuchtigkeitspartikel in die Kammer eindringen können. Bei Fahrten mit großen Höhenunterschieden wird der Druck in der Kammer dem Umgebungsdruck kontinuierlich angeglichen..

Eine weitere vorteilhafte Ausführung des erfindungsgemäßen Gegenstandes besteht gemäß Anspruch 3 darin, dass die Batterien in Regalen auf vor-und zurück beweglichen Tragschienen(10) gelagert sind.

Dies ermöglicht den Zugriff zu den einzelnen Batterien zu Wartungszwecken bzw. Austausch auf einfache Weise.

Gemäß Anspruch 4 weist jeder Regalträger einen Stoppanschlag auf, so dass ein unbeabsichtigter Totalauszug verhindert wird. So wird auch ein unbeabsichtigtes Vorgleiten bei einer nach vorne geneigten Fahrzeugstellung verhindert.

Gemäß Anspruch 5 sind zur Verriegelung der Tragschienen mit den Regalträgern in der Transportstellung Verriegelungsbolzen vorgesehen, welche bei geschlossener Kammertür gleichzeitig durch zentrische Bohrungen in den Halteplatten für die Verriegelungsbolzen, den Tragschienen, den Regalträgern durchgeführt werden und alternativ auch noch in eine Ausnehmung in den Batteriegehäusen eingreifen. Dadurch wird verhindert, dass sich die Batterien während des Transportes bei Erschütterungen oder bei starken Verzögerungen in ihrer Lage verschieben können.

Gemäß Anspruch 6 werden die Verriegelungsbolzen über Winkelhebel beim Schließen der Tür automatisch in die Verriegelungsstellung bewegt. So werden die Regalträger mit den Tragschienen und alternativ auch mit den Batterien beim Schließen der Tür automatisch verriegelt. Dies bedeutet eine Verbesserung der Sicherheit bei unüblichen Fahrzeugbewegungen.

Gemäß Anspruch 7 erfolgt die Vor-u. Rückbewegung der Tragschienen mittels Antriebsmotoren , welche unterhalb eines Regalfaches auf Konsolen angeordnet sind und mittels eines Reib-oder Zahneingriffes gesamt- oder einzelgesteuert auf die Tragschienen einwirken. Die Motoren sind mit Drehmomentsensoren ausgestattet, durch welche deren Antrieb in den vorderen oder hinteren Endlagen abgeschaltet wird. Nach Bedarf werden die Motoren mit umgepolter Stromrichtung wieder in Betrieb genommen. Dadurch vereinfacht sich die Manipulation der Ein-u. Auslagerung der Batterien ganz wesentlich. Der Strom für diese Motoren wird von einer in der Kammer befindlichen Pufferbatterie bezogen.

Gemäß Anspruch 8 ist es vorteilhaft, dass die Batterien über Steckverbindungen in den Regalen mit dem Batteriekabel verbunden sind. Somit werden die Batterien durch bloßes Einschieben in die Regalfächer mit dem Hauptstromkabel verbunden.

Gemäß Anspruch 9 ist es vorteilhaft, dass außen an der Kammer eine Ladekontrollanzeige der Batterien angeordnet ist, welche mittels eines Ladekontrollkabels mit dem Steckverbinder verbunden ist. Somit kann auf einfache Weise der Betriebszustand der Batterien überprüft werden.

Gemäß Anspruch 10 ist es vorteilhaft, dass in der Kammer Heizelemente angeordnet sind, welche mit einer Pufferbatterie verbunden sind. Bei sehr niedrigen Außentemperaturen wird damit in der Kammer eine günstige Betriebstemperatur für die Batterien eingestellt.

Gemäß Anspruch 11 sind in der Kammer auch Kühlelemente mit einem Außenkühler vorgesehen, damit bei entsprechenden klimatischen Bedingungen der Innenraum alternativ auch gekühlt wird.

Gemäß Anspruch 12 ist in vorteilhafter Weise außen an der Kammer eine Temperaturanzeige angeordnet, welche die Betriebstemperatur in der Kammer anzeigt. Dadurch wird ein Abweichen der Betriebstemperatur vom Normalbereich sofort angezeigt.

Gemäß den Merkmalen des Anspruches 13 ist die Tür der Kammer in vorteilhafter Weise als ISO-Norm Unfall-und Brandschutztür ausgeführt. Bei Unfällen oder Bränden innerhalb oder außerhalb der Kammer ist das von besonderem Vorteil.

Gemäß Anspruch 14 weist die Kammer innen eine Feuerschutzfolie auf. Diese ist etwa bei Kabelbränden besonders für die Sicherheit der Ladung des Containers wichtig.

Im Anspruch 15 wird hervorgehoben, dass in der Kammer eine Wärmeschutzfolie oder Wärmeschutzplatten vorgesehen sind, durch welche insbesondere während langer Standzeiten bei niedrigen Außentemperaturen die Temperatur in der Kammer für längere Zeit auf Betriebstemperaturniveau gehalten wird.

Weiters ist gemäß Anspruch 16 in der Kammer eine elektromagnetische Ladungsabschirmung vorgesehen, durch welche weder von innen noch von außen elektrische bzw. magnetische Störimpulse abgegeben bzw. empfangen werden. Damit werden mögliche Beeinflussungen von Personen und Geräten innerhalb oder außerhalb des Fahrzeuges vermieden.

Gemäß Anspruch 17 ist in der Kammer eine Löschanlage mit Auffangwanne vorgesehen, damit im Falle eines Brandes eine Brandbekämpfung unvermittelt erfolgen kann und dass die ausgebrachten Löschmittel zum Entsorgen gleich wieder in einer entsprechend dimensionierten Wanne gesammelt werden.

Insbesondere erweist es sich gemäß den Merkmalen des Anspruches 18 als vorteilhaft, dass eine außen am Wechselbrückenaufbau angeordnete Photovoltaik-Anlage über Batterieladekabel mit den Batterien verbunden ist. Somit wird eine eigene Stromversorgung bzw. ein eigener Ladestrom für die Batterien ermöglicht.

Zur Wartung der Batterien erweist es sich gemäß den Merkmalen des Anspruches 19 als vorteilhaft, dass ein GPS oder Funkübertragungsmodul mit Außenantenne zur Übertragung des Batterie-Ladezustandes, der Batterie-Betriebstemperatur sowie der geografischen Position zu einer Wartungsstation vorgesehen ist.

Beschreibung der Erfindung anhand der Zeichnungen, es zeigt:
Figur 1A Frontansicht des erfindungsgemäßen Wechselbrückenaufbaues
Figur 1B Seitenansicht des erfindungsgemäßen Wechselbrückenaufbaues
Anm: Wegen der identischen Übertragbarkeit der beanspruchten Merkmale ist der im Anspruch 1 hervorgehobene Container grafisch nicht dargestellt
Figur 2A: Schrägansicht des erfindungsgemäßen Wechselbrückenaufbaues
Figur 2B: Frontansicht einer Anordnung von mehreren Türen
Figur 3A: Frontansicht der Kammertür
Figur 3B: Seitenansicht der Kammertür
Figur 4A: Frontansicht der Kammer
Figur 4B: Stoppanschlag in unterdrückter Stellung
Figur 4C: Stoppanschlag für die Tragschienen in Stoppstellung
Figur 5A: Seitenansicht des Verriegelungsbolzens in Transportstellung
Figur 5B: Frontansicht des Verriegelungsbolzen in Transportstellung
Figur 6: Die Kammer in Seitenansicht, insbesondere mit Heizelement und Löschanlage
Figur 7: Die Kammer in Seitenansicht, insbesondere mit Kühlelement
Figur 8A: Frontansicht der Solarmodule und das GPS-Modul am Wechselbrückenaufbau
Figur 8B: Seitenansicht der Solarmodule am Wechselbrückenaufbau und das GPS-Modul

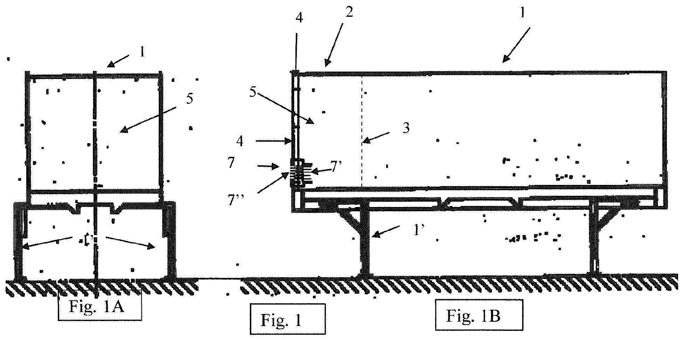

In Figur 1A wird schematisch ein Wechselbrückenaufbau 1 mit Stützfüßen 1' in Frontansicht gezeigt, wobei die erfindungsgemäße Kammer 5 im vorderen Teil 2 des Wechselbrückenaufbaues 1 angeordnet ist.

In Figur 1B wird der Wechselbrückenaufbau 1 in Seitenansicht dargestellt, wobei durch Anordnung der Trennwand 3 im vorderen Behälterbereich 2 die Kammer 5 gebildet wird. Eine oder mehrere Türen 4 zum Öffnen und Verschließen der Kammer 5 sind an der Frontseite angeordnet.

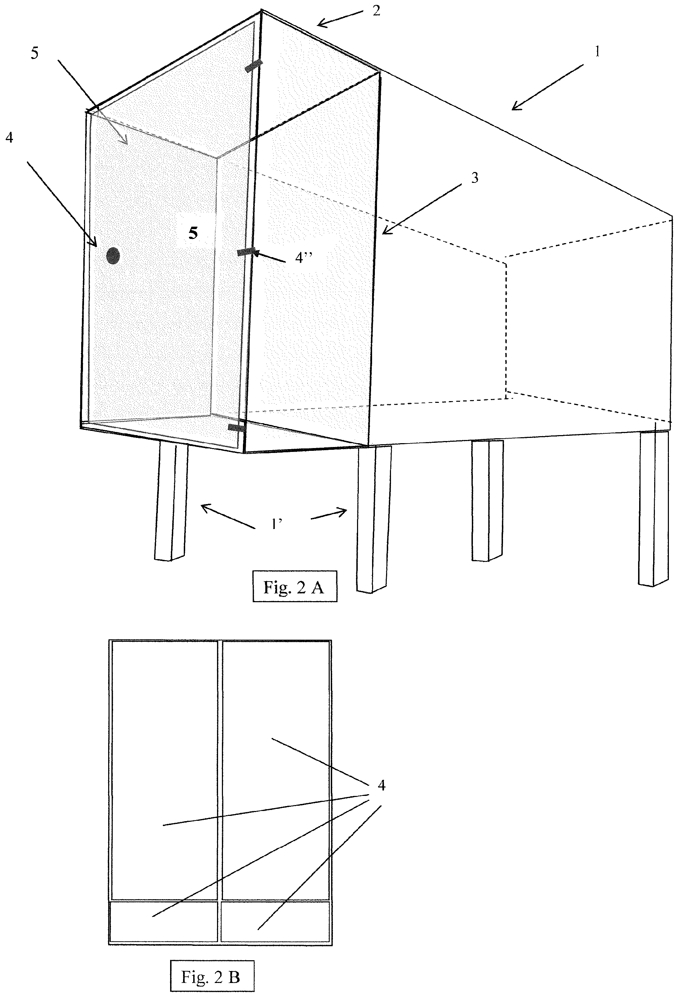

Figur 2A veranschaulicht den Wechselbrückenaufbau 1 in Schrägansicht. Im vorderen Behälterbereich 2 des Wechselbrückenaufbaues 1 ist die durch die Trennwand 3 gebildete Kammer 5 ersichtlich, wobei die Frontseite gesamtflächig durch eine einzige Tür 4 gebildet wird. Die Scharniere 4" der Tür 4 sind schematisch angedeutet.

Figur 2B zeigt eine alternative Anordnung von mehreren Türen 4 in der Frontseite. Damit wird ein separater Zugang zu einzelnen Kammerbereichen ermöglicht. Für die einzelnen Türen 4 sind dann jeweils eigene Anschlagrahmen vorgesehen.

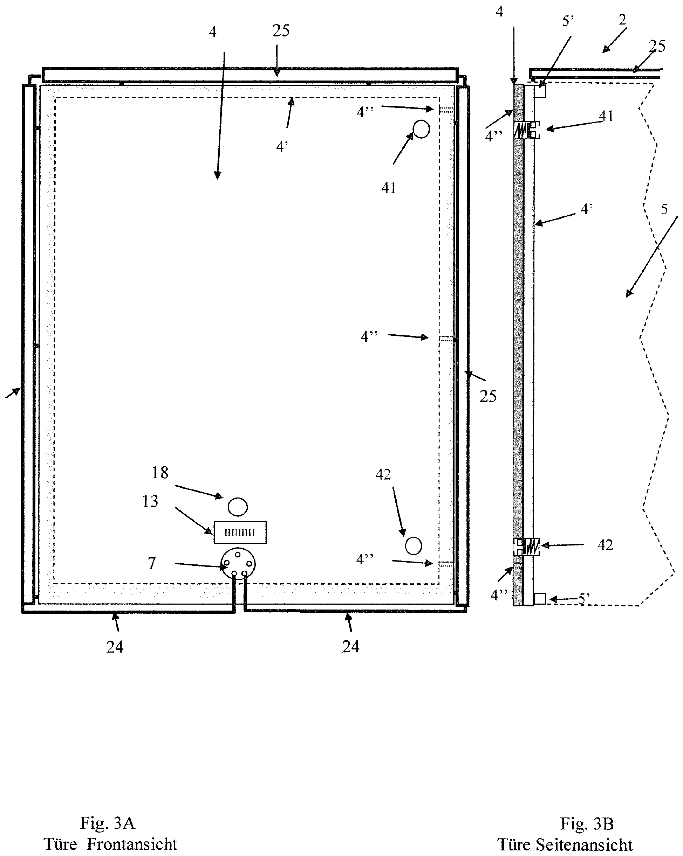

Figur 3A zeigt die Tür 4 in ganzflächiger Ausführung in Frontansicht von außen, wobei an deren Innenseite die Rahmendichtung 4' strichliert angedeutet ist.

In der Nähe des unteren Türrahmens ist der Steckverbinder 7, die Ladekontrollanzeige 13 für die Batterien 6 sowie die Temperaturanzeige 18 für die Kammer 5 schematisch dargestellt.

Figur 3B zeigt die ganzflächig ausgeführte Tür 4 in Seitenansicht, wobei diese zur Druckregulierung in der Kammer 5 durch ein Überdruckventil 41 als auch durch ein Unterdruckventil 42 durchsetzt wird. Auf der Innenseite der Tür 4 sind die Rahmendichtung 4' sowie die Türscharniere 4" skizzenhaft angedeutet. Auch der Anschlagrahmen 5' für die Tür 4 ist in dieser Figur ersichtlich.

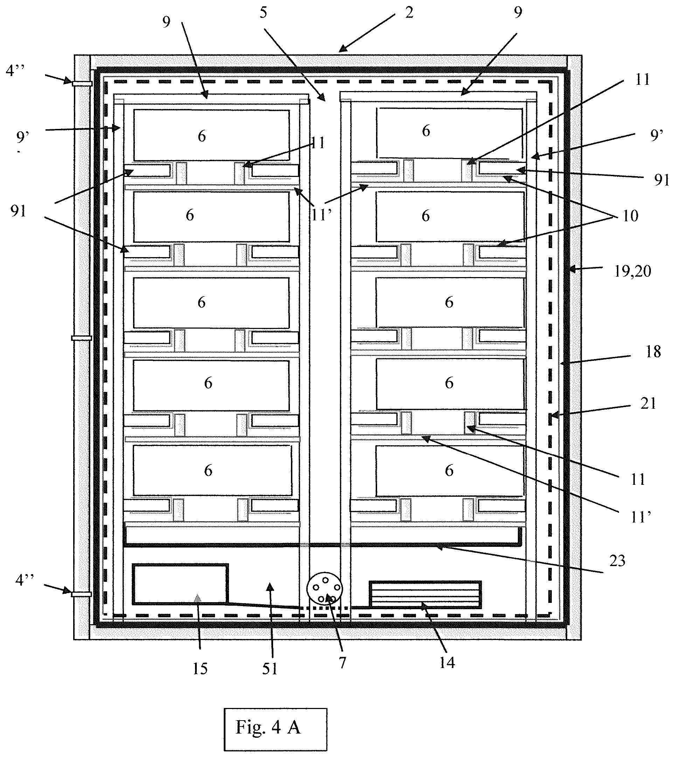

Figur 4A zeigt die Frontansicht der Kammer 5 sowie die Anordnung der Batterien 6 in den Regalen 9. Von Regalstehern 9' kragen die Regalträger 91 nach innen.. Diese Regalträger 91 werden von verschieblichen Schienen 10 von innen u-förmig umfasst, wobei diese zur Ein-u. Auslagerung der Batterien 6 manuell oder mittels Motoren 11über Reib-oder Zahneingriff vor und zurück bewegbar sind. Die Antriebsmotoren 11 sind fix auf einer Konsole 11' gelagert und werden von einer in der Kammer 5 angeordneten Pufferbatterie 15 mit Strom versorgt.

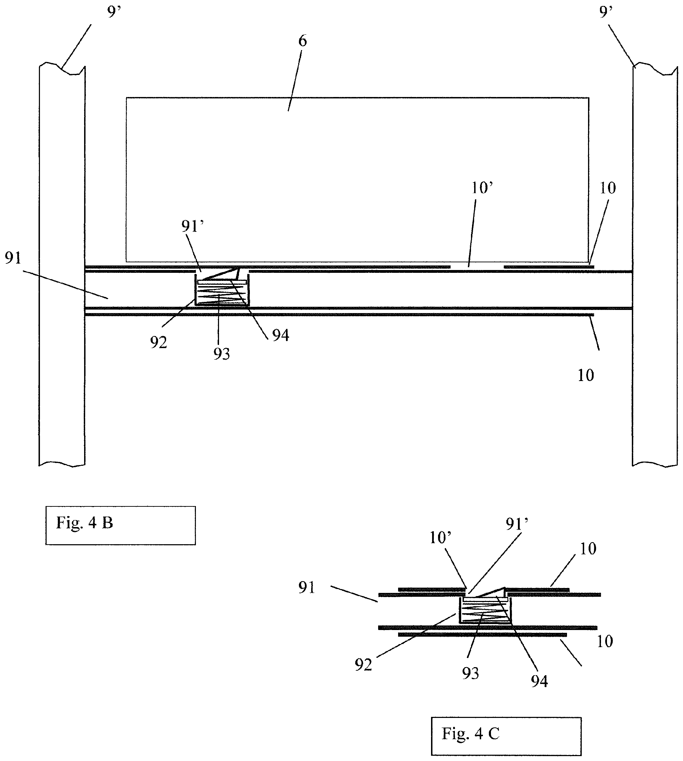

Figur 4B zeigt eine im vorderen Bereich des Regalträgers 91 angeordnete Öffnung 91' sowie einen Stoppanschlag 94, welcher in Einschubrichtung ansteigend abgeschrägt ist. Dieser Stoppanschlag 94 wird mit einer Feder 93 nach oben gegen die Unterseite der Regalschiene 10 gedrückt wird. Die Feder 93 befindet sich in einem Federbehälter 92. Dieser Federbehälter 92 ist im vorderen Bereich unter der Öffnung 91' des Regalträgers 91 angeordnet.

Figur 4C zeigt die Regalschiene 10 in der ausgefahrenen Position, bei welcher die in ihrem hinteren Bereich angeordnete Öffnung 10' mit der im Regalträger 91 angeordneten Öffnung 91' zur Deckung gebracht wurde. In dieser Stellung wird der Stoppanschlag 94 in die Öffnung 10' in der Regalschiene 10 gedrückt. Damit wird diese in der ausgefahrenen Stellung blockiert. Beim Einschieben der Regalschiene 10 in die Transportstellung, wird der Stoppanschlag 94 von der Regalschiene 10 nach unten gedrückt und damit wirkungslos.

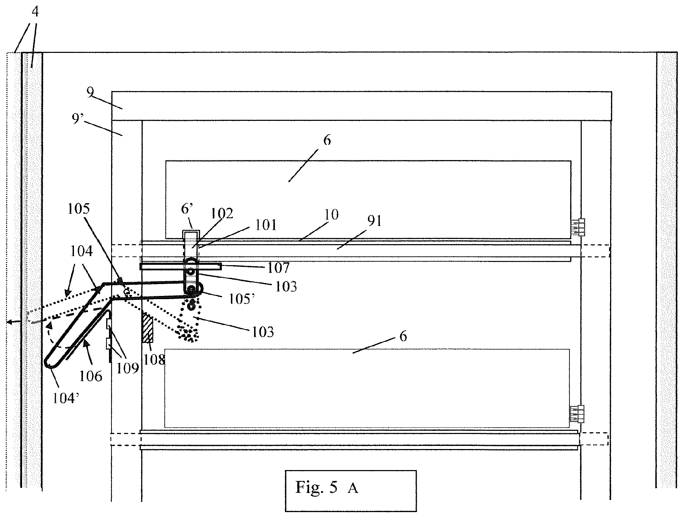

Figur. 5A zeigt in Seitenansicht die Verriegelung der Tragschienen 10 mit den Regalträgern 91 mittels des Verriegelungsbolzens 102. Dieser wird mit dem Winkelhebel 104 über den Zwischenhebel 103 durch die in Transportstellung fluchtenden Öffnungen 101, in der Halteplatte 107 für den Verriegelungsbolzen 102, in der Regalschiene 10 und im Regalträger 91 von unten nach oben geschoben. Der Verriegelungsbolzen 102 wird weiter in eine Ausnehmung 6' im Batteriegehäuse gehoben, sofern diese vorgesehen ist.

An der gezeigten Ausführung wird gezeigt, dass der Winkelhebel 104 über eine Achse 105 im Regalsteher 9' drehbar gelagert ist. Beim Öffnen der Türe 4 wird der Winkelhebels 104 durch die Blattfeder 106 in die Freigabestellung bewegt. Ein an der Innenseiten des Regalstehers 9' angeordneter Anschlag 108 begrenzt die Drehung des Winkelhebels 104. Der Winkelhebel 104 ist über den Achsstift 105' mit dem Zwischenhebel 103 und dieser mit dem Verriegelungsbolzen 102 verbunden. Die Blattfeder 106 ist mittels Blattfederhaltern 109 am Regalsteher 9' angelenkt.

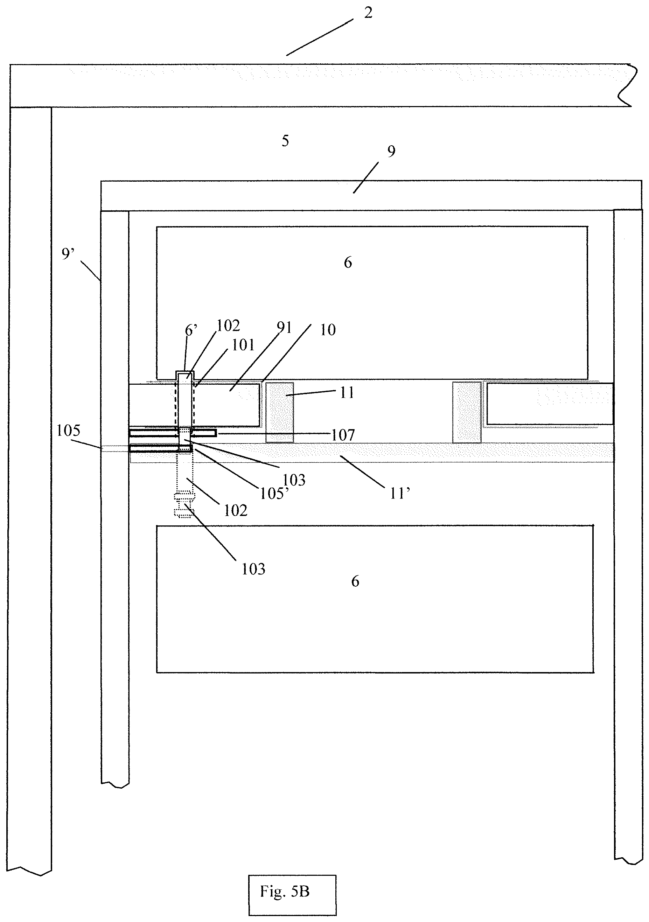

Fig. 5B zeigt lediglich den Verriegelungsbolzen 102 und Winkelhebel 104 in Frontansicht. Seine Freigabelage ist punktiert angedeutet.

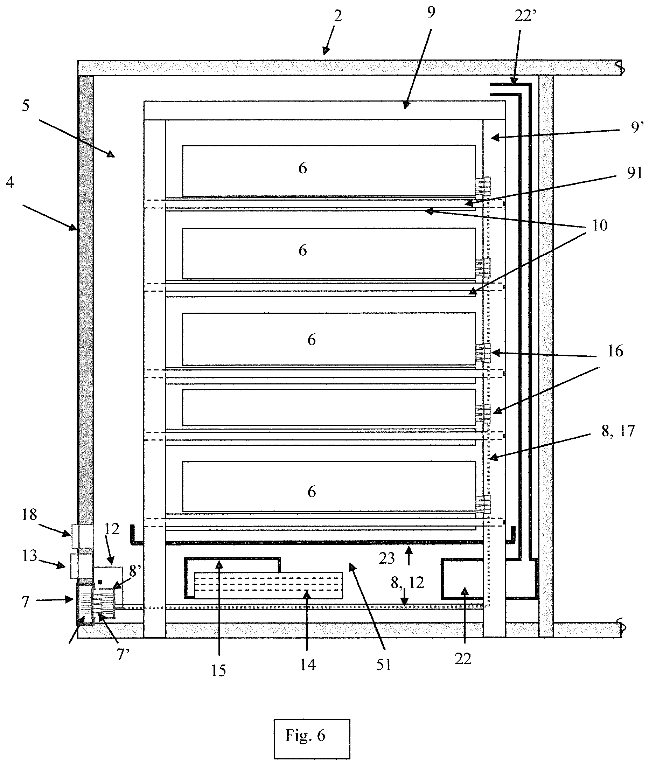

Figur 6 stellt die Kammer 5 sowie die Tür 4 in Seitenansicht dar, wobei in der Tür 4 der Steckverbinder 7 angeordnet ist, welcher in der Kammer 5 aus einem Stecker 7' und außerhalb der Kammer 5 aus einer Buchse 7" besteht.

In Betriebsstellung ist die Buchse 8' des Batteriekabels 8 mit dem innenseitigen Stecker 7' verbunden, wogegen die außenseitige Buchse 7" des Steckverbinders 7 mit dem Stecker des vom Zugfahrzeug kommenden Stromkabels verbunden ist. Oberhalb des Steckverbinders 7 ist außen an der Tür 4 eine Ladekontrollanzeige 13 angeordnet. Diese ist zur Anzeige des Batterie-Ladezustandes durch ein Ladekontrollkabel 12 mit dem Batteriekabel 8 verbunden.

Weiters ist außen an der Tür 4 eine Druck-u. Temperaturanzeige 18 für den Innendruck sowie für die Innentemperatur der Kammer 5 vorgesehen.

In einem eigenen Kammerbereich 51 der Kammer 5 ist die Löschanlage 22 mit dem Steigrohr 22' sowie die Auffangwanne 23 dargestellt, welche im Falle eines Brandes die eingebrachten Löschsubstanzen auffängt.

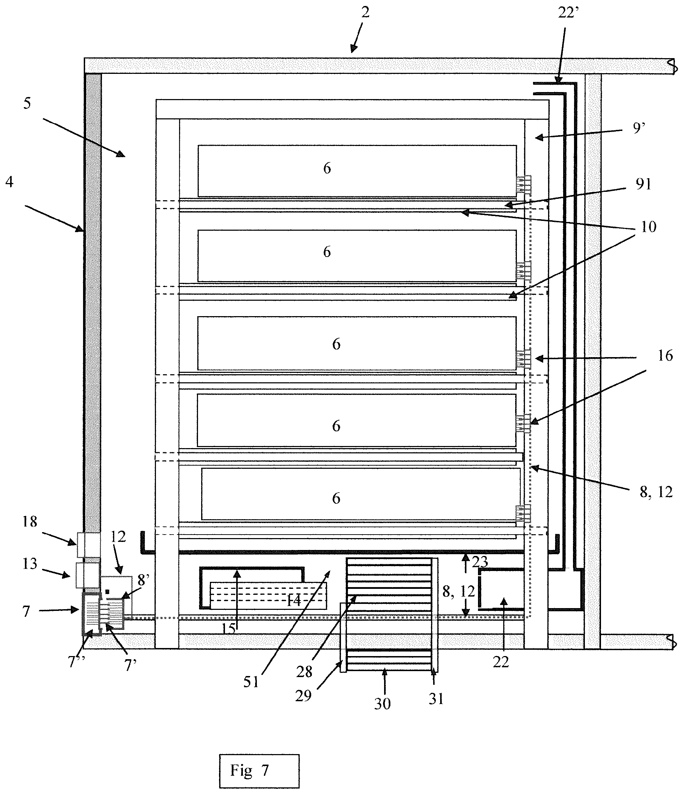

In Fig 7 zeigt ein elektrisches Heizelement 14 mit einer Pufferbatterie 15, welche ebenfalls in diesem Kammerbereich 51 angeordnet ist.

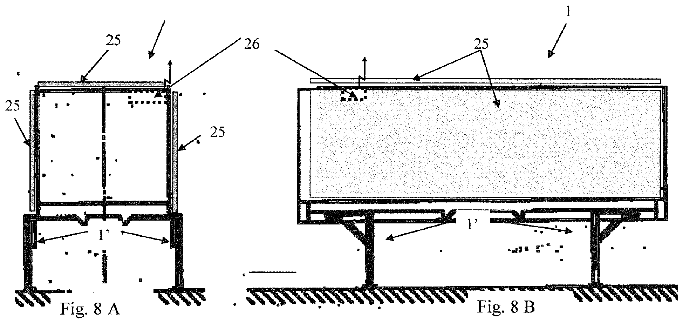

Fig 8A: zeigt den Wechselbrückenaufbau 1 in Frontansicht, auf welchem außen Solarmodule 25 einer Photovoltaik-Anlage angeordnet sind und ein innen angebrachtes GPS bzw. Funk-Modul 26, welches mit einer nach außen führenden Antenne verbunden ist.

Figur 8B zeigt den Wechselbrückenaufbau 1 in Seitenansicht mit den am Wechselbrückenaufbau 1 montierten Solarmodulen 25 sowie das innen angeordnete GPS- bzw. Funkmodul

## Patentansprüche

1. Wechselbrückenaufbau oder Transportcontainer, für elektrisch oder hybridangetriebene Zugfahrzeuge und Motorwagen mit zugeordnetem Batterieaufnahmefach, wobei im vorderen Bereich (2) des Wechselbrückenaufbaues (1) oder des Transportcontainers innen durch eine Trennwand (3) eine Kammer (5) für Batterien (6) gebildet wird und wobei der Wechselbrückenaufbau (1) oder der Transportcontainer an der Vorderseite eine ganzflächige Tür (4) oder mehrere teilflächige Türen (4) aufweist, **dadurch gekennzeichnet, dass** die Kammer (5) einen Steckverbinder (7) aufweist, welcher innen aus einem Stecker (7') und außen aus einer Buchse (7' ') besteht.

2. Wechselbrückenaufbau oder Transportcontainer nach Anspruch 1, **dadurch gekennzeichnet, dass** die ganzflächige Tür (4) eine Rahmendichtung (4') aufweist und dass an der ganzflächigen Tür (4) oder an einer der teilflächigen Türen (4) ein Überdruckventil (41) und ein Unterdruckventil (42) angeordnet ist.

3. Wechselbrückenaufbau oder Transportcontainer nach Anspruch 1, **dadurch gekennzeichnet, dass** die Batterien (6) vorhanden und in Regalen (9) auf vor- und zurück beweglichen Traqschienen(10) gelagert sind, welche an Regalstehern (9') angeordnete Regalträgern (91) seitlich u-förmig umfassen.

4. Wechselbrückenaufbau oder Transportcontainer nach Anspruch 3, **dadurch gekennzeichnet, dass** die Regalträger (91) in ihrem vorderen Bereich oberseitig eine Öffnung (91') und die Traqschienen(10) in ihrem hinteren Bereich oberseitig eine Öffnung (10') aufweisen und dass in Einschubrichtung der Batterien (6) ansteigend abgeschrägte Stoppanschläge (94) vorgesehen sind, welche mittels Federn (93) gegen die Bewegungsbahn der Traqschienen(10) belastet sind.

5. Wechselbrückenaufbau oder Transportcontainer nach Anspruch 3 oder 4, **dadurch gekennzeichnet, dass** bei geschlossener ganzflächiger Tür (4) oder geschlossenen teilflächigen Türen (4) die Tragschienen (10) mit den Regalträgern (91) durch Verriegelungsbolzen (102) verriegelt sind, welche durch Öffnungen (101) in Halteplatten (107) für die Verriegelungsbolzen (102), in den Regalträgern (91) und Tragschienen (10) geführt sind und vorzugsweise in Aufnahmen (6') der Batterien (6) hineinragen.

6. Wechselbrückenaufbau oder Transportcontainer nach Anspruch 5, dass die Verriegelungsbolzen (102) über Winkelhebel (104), welche über Achsen (105) im Regal (9) drehbar gelagert sind und mittels Zwischenhebel (103) mit den Winkelhebeln (104) verbunden sind, wobei Blattfedern (106) die Außenseiten (104') der Winkelhebel (104) in die Freigabestellung bewegen.

7. Wechselbrückenaufbau oder Transportcontainer nach einem der Ansprüche 3 bis 6, **dadurch gekennzeichnet, dass** die Tragschienen (10) mittels Drehmomentsensoren ausgestattete Antriebsmotoren (l1) mit Zahn- oder Reibeingriff vor-u. zurück bewegbar ausgebildet sind, wobei die Antriebsmotoren auf Konsolen (11') fixiert sind.

8. Wechselbrückenaufbau oder Transportcontainer nach Anspruch 3, **dadurch gekennzeichnet, dass** die Batterien (6) vorhanden und über Steckverbindungen (16) in den Regalen (9) mit den Batteriekabeln (8) verbunden sind.

9. Wechselbrückenaufbau oder Transportcontainer, nach einem der Ansprüche 1 bis 8, **dadurch gekennzeichnet, dass** außen an der Kammer (5) eine Ladekontrollanzeige (13) der Batterien (6) angeordnet ist, welche mittels eines Ladekontrollkabels (12) mit dem Steckverbinder (7) verbunden ist.

10. Wechselbrückenaufbau oder Transportcontainer nach einem der Ansprüche 1 bis 9, **dadurch gekennzeichnet, dass** in der Kammer (5) Heizelemente (14) angeordnet sind, welche mit der Pufferbatterie (15) verbunden sind.

11. Wechselbrückenaufbau oder Transportcontainer nach einem der Ansprüche 1 bis 10, **dadurch gekennzeichnet, dass** in der Kammer (5) Kühlelemente (28) mit einem Außenkühler (30) vorgesehen sind, welche über die Kühlmittelleitungen (29, 31) verbunden sind.

12. Wechselbrückenaufbau oder Transportcontainer nach einem der Ansprüche 1 bis 11, **dadurch gekennzeichnet, dass** außen an der Kammer (5) eine Temperaturanzeige (18) der Innentemperatur der Kammer (5) angeordnet ist.

13. Wechselbrückenaufbau oder Transportcontainer nach einem der Ansprüche 1 bis 12, **dadurch gekennzeichnet, dass** die ganzflächige Tür (4) oder die teilflächigen Türen (4) als Unfall-und Brandschutztür ausgeführt ist beziehungsweise sind.

14. Wechselbrückenaufbau oder Transportcontainer nach einem der Ansprüche 1 bis 13, **dadurch gekennzeichnet, dass** die Kammer (5) innen eine Feuerschutzbeschichtung (19) aufweist.

15. Wechselbrückenaufbau oder Transportcontainer nach einem der Ansprüche 1 bis 14 **dadurch gekennzeichnet, dass** in der Kammer (5) eine Wärmeschutzfolie ist oder Wärmeschutzplatten (20) angeordnet sind.

16. Wechselbrückenaufbau oder Transportcontainer nach einem der Ansprüche 1 bis 15, **dadurch gekennzeichnet, dass** die Kammer (5) eine elektromagnetische Ladungsabschirmung (21) aufweist.

17. Wechselbrückenaufbau oder Transportcontainer nach einem der Ansprüche 1 bis 16, **dadurch gekennzeichnet, dass** in der Kammer (5) eine Löschanlage (22) mit Auffangwanne (23) angeordnet ist

18. Wechselbrückenaufbau oder Transportcontainer nach einem der Ansprüche 1 bis 17, **dadurch gekennzeichnet, dass** außen am Wechselbrückenaufbau (1) angeordnete Solarmodule (25) einer Photovoltaik-Anlage über Ladekabel (24) mit den Batterien (6) verbunden sind.

19. Wechselbrückenaufbau oder Transportcontainer nach einem der Ansprüche 1 bis 18, **dadurch gekennzeichnet, dass** ein GPS oder Funkübertragungsmodul (26) zur Übertragung des Batterie- Ladezustandes, der Batterie-Betriebstemperatur sowie der geografischen Koordinaten des jeweiligen Fahrzeugstandortes vorgesehen ist

## Claims

1. Swap body structure or transport container for electrically or hybrid-powered towing vehicles and motor vehicles with an associated battery compartment, wherein a chamber (5) for batteries (6) is formed in the front area (2) of the swap body structure (1) or the transport container by means of a partition wall (3) and wherein the swap body structure (1) or the transport container has a full-surface door (4) or several partial-surface doors (4) at the front, **characterized in that** the compartment (5) has a plug connector (7) which consists of a plug (7') on the inside and a socket (7") on the outside.

2. Swap body structure or transport container according to claim 1, **characterized in that** the full-surface door (4) has a frame seal (4') and that a pressure relief valve (41) and a vacuum valve (42) are arranged on the full-surface door (4) or on one of the partial-surface doors (4).

3. Swap body structure or transport container according to claim 1, **characterized in that** the batteries (6) are provided and are mounted in compartments (9) on forward and backward movable guide rails (10), which are laterally U-shaped and surround compartment carriers (91) arranged on compartment posts (9').

4. Swap body structure or transport container according to claim 3, **characterized in that** that the support beams (91) have an opening (91') in their front area on the upper side and the transport rails (10) have an opening (10') in their rear area on the upper side, and that stop stops (94) are provided at an angle in the insertion direction of the batteries (6), which are loaded against the movement path of the guide rails (10) by means of springs (93).

5. Swap body structure or transport container according to claim 3 or 4, **characterized in that** when the door (4) is closed over the entire surface or when the doors (4) are closed over part of the surface, the support rails (10) are locked to the shelf supports (91) by locking bolts (102), which are guided through openings (101) in retaining plates (107) for the locking bolts (102) in the shelf supports (91) and support rails (10) and preferably protrude into receptacles (6') of the batteries (6).

6. Swap body structure or transport container according to claim 5, **characterized in that** the locking bolts (102) are connected to the angle levers (104) via angle levers (104), which are rotatably mounted on axles (105) in the rack (9) and connected to the angle levers (104) by means of intermediate levers (103), wherein leaf springs (106) move the outer sides (104') of the angle levers (104) into the release position.

7. Swap body structure or transport container according to one of claims 3 to 6, **characterized in that** the support rails (10) are designed to be moved forward and backward by means of drive motors (11) equipped with torque sensors and with tooth or friction engagement, wherein the drive motors are fixed on consoles (11').

8. Swap body structure or transport container according to claim 3, **characterized in that** the batteries (6) are provided and connected to the battery cables (8) in the shelves (9) via plug connections (16).

9. Swap body structure or transport container, according to one of claims 1 to 8, **characterized in that** a load control indicator (13) for the batteries (6) is arranged on the outside of the chamber (5) and is connected to the plug connector (7) by means of a load control cable (12).

10. Swap body structure or transport container according to one of claims 1 to 9, **characterized in that** heating elements (14) are arranged in the chamber (5) and are connected to the test battery (15).

11. Swap body structure or transport container according to one of claims 1 to 10, **characterized in that** cooling elements (28) with an external cooler (30) are provided in the chamber (5), which are connected via the coolant lines (29, 31).

12. Swap body structure or transport container according to one of claims 1 to 11, **characterized in that** a temperature display (18) for the internal temperature of the chamber (5) is arranged on the outside of the chamber (5).

13. Swap body structure or transport container according to one of claims 1 to 12, **characterized in that** the full-surface door (4) or the partial-surface doors (4) are designed as accident and fire protection doors.

14. Swap body structure or transport container according to one of claims 1 to 13, **characterized in that** the chamber (5) has a fire protection coating (19) on the inside.

15. Swap body structure or transport container according to one of claims 1 to 14, **characterized in that** a heat insulation film or heat insulation panels (20) are arranged in the chamber (5).

16. Swap body structure or transport container according to one of claims 1 to 15, **characterized in that** the chamber (5) has an electromagnetic charge shield (21).

17. Swap body structure or transport container according to one of claims 1 to 16, **characterized in that** a discharge system (22) with a drip tray (23) is arranged in the chamber (5).

18. Swap body structure or transport container according to one of claims 1 to 17, **characterized in that** solar modules (25) of a photovoltaic system arranged on the outside of the swap body structure (1) are connected to the batteries (6) via charging cables (24).

19. Swap body structure or transport container according to one of claims 1 to 18, **characterized in that** a GPS or radio transmission module (26) is provided for transmitting the battery charge status, the battery operating temperature and the geographical coordinates of the respective vehicle location.

## Revendications

1. Structure de caisse mobile ou conteneur de transport, pour des véhicules de traction à entraînement électrique ou hybride et des véhicules à moteur avec un compartiment de réception de batterie associé,
dans laquelle ou lequel une chambre (5) pour des batteries (6) est formée à l'intérieur par une paroi de séparation (3) dans la zone avant (2) de la structure de caisse mobile (1) ou du conteneur de transport et
dans laquelle ou lequel la structure de caisse mobile (1) ou le conteneur de transport présente sur la face avant une porte (4) sur toute la surface ou plusieurs portes (4) sur une surface partielle, caractérisée ou **caractérisé en ce que** la chambre (5) présente un connecteur (7) qui est constitué à l'intérieur d'une fiche mâle (7') et à l'extérieur d'une prise femelle (7' ').

2. Structure de caisse mobile ou conteneur de transport selon la revendication 1, caractérisée ou **caractérisé en ce que** la porte (4) sur toute la surface présente un joint d'étanchéité de cadre (4') et qu'une soupape de surpression (41) et une valve de dépression (42) sont disposées sur la porte (4) sur toute la surface ou sur une des portes (4) sur une surface partielle.

3. Structure de caisse mobile ou conteneur de transport selon la revendication 1, caractérisée ou **caractérisé en ce que** les batteries (6) sont présentes et sont stockées dans des rayonnages (9) sur des rails porteurs (10) mobiles vers l'avant et vers l'arrière, qui comprennent latéralement en forme de U des supports de rayonnage (91) disposés sur des montants de rayonnage (9).

4. Structure de caisse mobile ou conteneur de transport selon la revendication 3, caractérisée ou **caractérisé en ce que** les supports de rayonnage (91) présentent dans leur zone avant côté supérieur une ouverture (91') et les rails porteurs (10) présentent dans leur zone arrière côté supérieur une ouverture (10') et que des butées d'arrêt (94) biseautées de manière ascendante sont prévues dans le sens d'insertion des batteries (6), lesquelles sont chargées par des ressorts (93) à l'encontre la trajectoire de déplacement des rails porteurs (10).

5. Structure de caisse mobile ou conteneur de transport selon la revendication 3 ou 4, caractérisée ou **caractérisé en ce que**, lorsque la porte (4) sur toute la surface ou les portes (4) sur une surface partielle sont fermées, les rails porteurs (10) sont verrouillés avec les supports de rayonnage (91) par des boulons de verrouillage (102), qui sont guidés par des ouvertures (101) dans des plaques de maintien (107) pour les boulons de verrouillage (102), dans les supports de rayonnage (91) et les rails porteurs (10) et dépassent de préférence dans des logements (6') des batteries (6).

6. Structure de caisse mobile ou conteneur de transport selon la revendication 5, caractérisée ou **caractérisé en ce que** les boulons de verrouillage (102) par l'intermédiaire de leviers coudés (104), qui sont montés de manière à pouvoir tourner dans le rayonnage (9) par l'intermédiaire d'axes (105) et sont reliés aux leviers coudés (104) au moyen de leviers intermédiaires (103), dans laquelle ou lequel les ressorts à lames (106) déplacent les côtés extérieurs (104') des leviers coudés (104) dans la position de libération.

7. Structure de caisse mobile ou conteneur de transport selon l'une quelconque des revendications 3 à 6, caractérisée ou **caractérisé en ce que** les rails porteurs (10) sont réalisés de manière à pouvoir être déplacés vers l'avant et vers l'arrière engrènement denté ou par friction au moyen de moteurs d'entraînement (11) équipés de capteurs de couple de rotation, dans laquelle ou lequel les moteurs d'entraînement sont fixés sur des consoles (11').

8. Structure de caisse mobile ou conteneur de transport selon la revendication 3, caractérisée ou **caractérisé en ce que** les batteries (6) sont présentes et sont reliées aux câbles de batterie (8) par des connexions enfichables (16) dans les rayonnages (9).

9. Structure de caisse mobile ou conteneur de transport, selon l'une quelconque des revendications 1 à 8, caractérisée ou **caractérisé en ce qu'**un affichage de contrôle de charge (13) des batteries (6) est disposé à l'extérieur sur la chambre (5), lequel est relié au connecteur (7) au moyen d'un câble de contrôle de charge (12).

10. Structure de caisse mobile ou conteneur de transport selon l'une quelconque des revendications 1 à 9, caractérisée ou **caractérisé en ce que** des éléments chauffants (14), qui sont reliés à la batterie tampon (15), sont disposés dans la chambre (5).

11. Structure de caisse mobile ou conteneur de transport selon l'une quelconque des revendications 1 à 10, caractérisée ou **caractérisé en ce que** des éléments de refroidissement (28) sont prévus dans la chambre (5) avec un refroidisseur extérieur (30), lesquels sont reliés par l'intermédiaire des conduites de liquide de refroidissement (29, 31).

12. Structure de caisse mobile ou conteneur de transport selon l'une quelconque des revendications 1 à 11, caractérisée ou **caractérisé en ce qu'**un indicateur de température (18) de la température intérieure de la chambre (5) est disposé à l'extérieur sur la chambre (5).

13. Structure de caisse mobile ou conteneur de transport selon l'une quelconque des revendications 1 à 12, caractérisée ou **caractérisé en ce que** la porte (4) sur toute la surface ou les portes (4) sur une surface partielle sont réalisées en tant que ou sont une porte anti-accident et porte coupe-feu.

14. Structure de caisse mobile ou conteneur de transport selon l'une quelconque des revendications 1 à 13, caractérisée ou **caractérisé en ce que** la chambre (5) présente à l'intérieur un revêtement ignifuge (19).

15. Structure de caisse mobile ou conteneur de transport selon l'une quelconque des revendications 1 à 14, caractérisée ou **caractérisé en ce qu'**une feuille de protection thermique ou des plaques de protection thermique (20) sont disposées dans la chambre (5).

16. Structure de caisse mobile ou conteneur de transport selon l'une quelconque des revendications 1 à 15, caractérisée ou **caractérisé en ce que** la chambre (5) présente un blindage électromagnétique de charge (21).

17. Structure de caisse mobile ou conteneur de transport selon l'une quelconque des revendications 1 à 16, caractérisée ou **caractérisé en ce qu'**une installation d'extinction (22) avec un bac de rétention (23) est disposée dans la chambre (5)

18. Structure de caisse mobile ou conteneur de transport selon l'une quelconque des revendications 1 à 17, caractérisée ou **caractérisé en ce que** des modules solaires (25) d'une installation photovoltaïque disposés à l'extérieur sur la structure de caisse mobile (1) sont reliés aux batteries (6) par un câble de charge (24).

19. Structure de caisse mobile ou conteneur de transport selon l'une quelconque des revendications 1 à 18, caractérisée ou **caractérisé en ce qu'**un GPS ou un module de transmission radio (26) est prévu pour la transmission de l'état de charge de la batterie, de la température de fonctionnement de la batterie ainsi que des coordonnées géographiques de l'emplacement de véhicule respectif.
